# EUROPEAN PATENT APPLICATION

(11) **EP 4 654 356 A1**
(43) Date of publication of application: **26.11.2025**
(21) Application number: 24771204.5
(22) Date of filing: 13.03.2024
(51) Int. Cl.: H01M 50/296, H01M 50/258, H01R 13/629

(54) **CONNECTOR ASSEMBLY**

(30) Priority: 14.03.2023 KR 20230033567; 31.08.2023 KR 20230115116
(71) Applicant: LG Energy Solution, Ltd., Seoul 07335 (KR)
(72) Inventor: YOON, Sang Hyun, Daejeon 34122 (KR); LEE, Hye Jun, Siheung-si Gyeonggi-do 15084 (KR); LEE, Chang Ho, Siheung-si Gyeonggi-do 15084 (KR); IM, Young Bin, Daejeon 34122 (KR); KIM, Sung Gyu, Daejeon 34122 (KR); LEE, Jae Uk, Daejeon 34122 (KR)
(74) Representative: Plasseraud IP
(86) International application number: PCT/KR2024/003249
(87) International publication number: WO 2024/191205

(57) **Abstract**

A connector assembly according to an embodiment of the present disclosure includes a first connector including a first body portion, and a first connection portion that protrudes toward a direction from the first body portion, and a second connector including a second body portion, and a second connection portion recessed in the insertion direction of the first connection portion from the second body portion to accommodate the first connection portion, wherein an inclined portion is formed at an edge of the second connection portion and inclined to allow the first connection portion to slide.

## Description

### TECHNICAL FIELD

### CROSS-REFERENCE TO RELATED APPLICATIONS

The present application claims priority to Korean Patent Application No. 10-2023-0033567 filed on March 14, 2023 and Korean Patent Application No. 10-2023-0115116 filed on August 31, 2023 in the Republic of Korea, the disclosures of which are incorporated herein by reference.

### TECHNICAL FIELD

The present disclosure relates to a connector assembly.

### BACKGROUND ART

To meet the growing demand for new energy sources as an alternative to oil resources that will fall short and solve the environmental pollution problem that gradually gets worse, research and development efforts are devoted to energy production based on eco-friendly energy sources. Particularly, many studies have been conducted on secondary batteries that can be repeatedly recharged, and research is being made in various aspects of secondary batteries such as materials, structures, processes and stability.

Secondary batteries may be managed for each module or pack, and modules or packs including secondary batteries may be electrically connected through a connector. Particularly, to effectively manage an energy storage system including secondary batteries, it is necessary to smoothly send and receive power and control signals using the connector.

According to the related art, the module or the connector may be damaged by repeated demounting and mounting, or the internal components of the connector may be detached by external forces.

### SUMMARY

### TECHNICAL PROBLEM

The present disclosure is directed to providing a connector assembly for achieving stable and effective assembly.

### TECHNICAL SOLUTION

A connector assembly according to an embodiment of the present disclosure includes a first connector including a first body portion, and a first connection portion that protrudes toward a direction from the first body portion, and a second connector including a second body portion, and a second connection portion recessed in the insertion direction of the first connection portion from the second body portion to accommodate the first connection portion, wherein an inclined portion is formed at an edge of the second connection portion and inclined to allow the first connection portion to slide.

### ADVANTAGEOUS EFFECTS

According to an exemplary embodiment of the present disclosure, it may be possible to enhance assembly stability of the connector assembly.

According to an exemplary embodiment of the present disclosure, it may be possible to enhance assembly convenience of the connector assembly.

### BRIEF DESCRIPTION OF THE DRAWINGS

FIG. 1 is an exploded perspective view of an energy storage system according to an embodiment of the present disclosure.
FIG. 2 is a perspective view showing an assembly of battery module assemblies according to an embodiment of the present disclosure.
FIG. 3 is a cross-sectional view showing pre-mounted battery module assemblies according to an embodiment of the present disclosure.
FIG. 4 is a cross-sectional view showing a certain point of time when terminals are being coupled according to an embodiment of the present disclosure.
FIG. 5 is a cross-sectional view showing coupled terminals according to an embodiment of the present disclosure.
FIG. 6 is a perspective view showing a connector assembly in a coupled state according to an embodiment of the present disclosure.
FIG. 7 is an exploded perspective view of a second connector according to an embodiment of the present disclosure.
FIG. 8 is an exploded perspective view of a first connector according to an embodiment of the present disclosure.
FIG. 9 is an exploded perspective view showing a terminal block of a first connector according to an embodiment of the present disclosure.
FIG. 10 is a perspective view showing a terminal block of a first connector according to an embodiment of the present disclosure.
FIG. 11 is a diagram of a first connector housing according to an embodiment of the present disclosure when viewed from a direction.
FIG. 12 is a cross-sectional view of a first connector according to an embodiment of the present disclosure.
FIG. 13 is a cross-sectional view showing a first locking structure for first high voltage of a first connector according to an embodiment of the present disclosure.
FIG. 14 is a cross-sectional view showing a second locking structure for first high voltage of a first connector according to an embodiment of the present disclosure.
FIG. 15 is a conceptual diagram showing a first locking structure and a second locking structure for first low voltage of a first connector according to an embodiment of the present disclosure.
FIG. 16 is an exploded perspective view showing a connector assembly according to an embodiment of the present disclosure.
FIG. 17 is a perspective view showing a first connector housing according to an embodiment of the present disclosure.
FIG. 18 is a top view showing a first connector housing according to an embodiment of the present disclosure.
FIG. 19 is a perspective view showing a second connector housing according to an embodiment of the present disclosure.
FIG. 20 is a top view showing a second connector housing according to an embodiment of the present disclosure.
FIG. 21 is a perspective view showing an inclined portion of a second connector housing according to an embodiment of the present disclosure.
FIG. 22 is a conceptual diagram showing sliding of a first connector and a second connector according to an embodiment of the present disclosure.
FIG. 23 is a perspective view showing a holding member mounted in a first connector housing according to an embodiment of the present disclosure.
FIG. 24 is a conceptual diagram showing a holding member mounted in a first connector housing according to an embodiment of the present disclosure.
FIG. 25 is a partial enlarged view showing a holding member mounted in a first connector housing according to an embodiment of the present disclosure.
FIG. 26 is an exploded perspective view showing a terminal block for first high voltage and a terminal for first high voltage according to an embodiment of the present disclosure.
FIG. 27 is a perspective view showing a terminal block for first high voltage and a terminal for first high voltage in a coupled state according to an embodiment of the present disclosure.
FIG. 28 is a perspective view showing a terminal block mount portion of a first connector housing according to an embodiment of the present disclosure.
FIG. 29 is a bottom view showing a terminal block mount portion of a first connector according to an embodiment of the present disclosure.
FIG. 30 is a conceptual diagram showing a first connector mounted in a first connector mount portion according to an embodiment of the present disclosure.
FIG. 31 is a bottom view showing a terminal block mount portion of a second connector according to an embodiment of the present disclosure.
FIG. 32 is a conceptual diagram showing a second connector mounted in a second connector mount portion according to an embodiment of the present disclosure.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

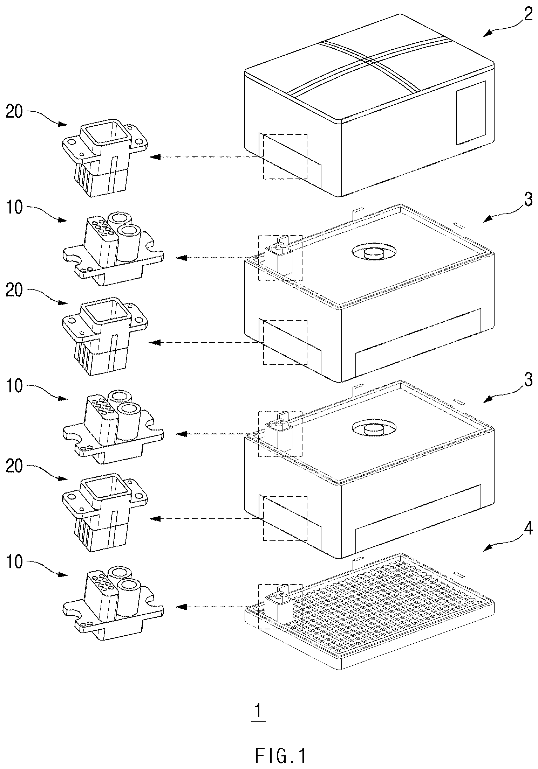

FIG. 1 is an exploded perspective view of an energy storage system according to an embodiment of the present disclosure.

The energy storage system 1 may include a battery control unit 2. The battery control unit 2 may control the entire energy storage system 1.

The energy storage system 1 may include a battery module assembly 3. The battery module assembly 3 may be an assembly including battery modules or batteries therein. The battery module assembly 3 may include a plurality of battery module assemblies 3.

The energy storage system 1 may include a bottom plate assembly 4. The bottom plate assembly 4 may form a bottom boundary of the energy storage system 1.

The energy storage system 1 may include the battery module assemblies 3 stacked on the bottom plate assembly 4 and the battery control unit 2 stacked on the battery module assembly 3.

The energy storage system 1 may include a first connector 10 and a second connector 20. For example, the first connector 10 and the second connector 20 may electrically connect the bottom plate assembly 4, the battery module assemblies 3 and the battery control unit 2 stacked on top of each other.

Specifically, for example, the first connector 10 and the second connector 20 may be disposed at an upper part and a lower part of each of the battery module assemblies 3. In this instance, the first connector 10 may be disposed in the bottom plate assembly 4, and the second connector 20 may be disposed in the battery control unit 2. However, the present disclosure is not limited thereto.

As in the above-described example of the energy storage system 1, the bottom plate assembly 4, the battery module assemblies 3 and the battery control unit 2 may be electrically connected by the first connector 10 and the second connector 20.

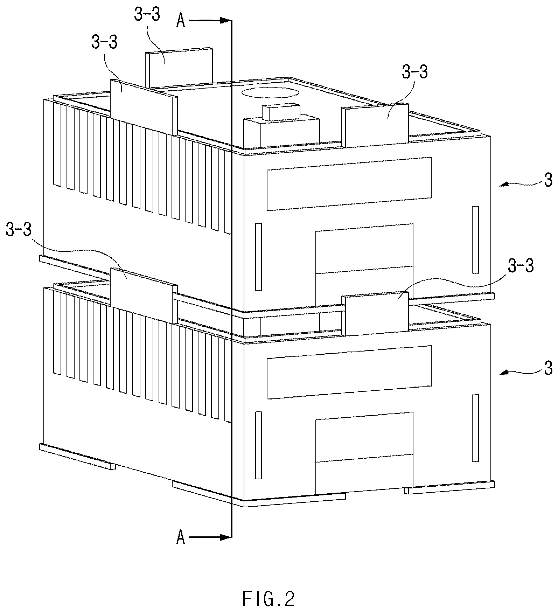

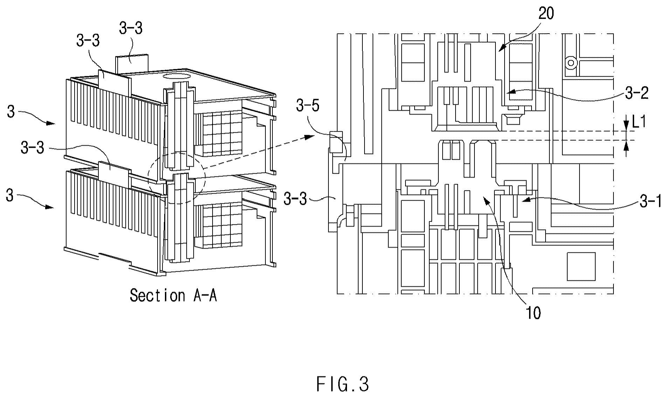

FIG. 2 is a perspective view showing the assembly of the battery module assemblies according to an embodiment of the present disclosure, and FIG. 3 is a cross-sectional view showing the pre-mounted battery module assemblies according to an embodiment of the present disclosure.

The energy storage system 1 may include the plurality of battery module assemblies 3. For convenience of description, a lower battery module assembly of two battery module assemblies 3 may be defined as a first battery module assembly and an upper battery module assembly may be defined as a second battery module assembly.

For example, the energy storage system 1 may include the first battery module assembly and the second battery module assembly mounted on the first battery module assembly.

The first connector 10 may be mounted in a first connector mount portion 3-1 of the first battery module assembly. The second connector 20 may be mounted in a second connector mount portion 3-2 of the second battery module assembly.

The first battery module assembly may include a module guide 303. The module guide 3-3 may be configured to guide the mounting with the second battery module assembly.

The module guide 3-3 may include a plurality of module guides 3-3.

Describing in detail using an example, the first battery module assembly may be in a shape of a rectangular prism. In this instance, the module guide 3-3 may be formed at two or more of the edges of the first battery module assembly when viewed from top.

The module guide 3-3 may be formed at the edge of the first battery module assembly. The module guide 3-3 may extend in an upward direction from the edge of the first battery module assembly.

The second battery module assembly may include a guide mount portion 3-5. The guide mount portion 3-5 may be configured to mount the module guide 3-3.

The guide mount portion 3-5 may include a plurality of guide mounts 3-5. For example, the module guide 3-3 may include the plurality of module guides 3-3 extending in the upward direction from the edge of the first battery module assembly, and the second battery module assembly may include the guide mount portions 3-5 where the module guides 3-3 are mounted.

The battery module assembly 3 may include both the module guide 3-3 and the guide mount portion 3-5. For example, the module guide 3-3 may be formed at the upper edge of the battery module assembly 3, and the guide mount portion 3-5 may be formed at the lower edge. In this case, it may be easy to stack the battery module assemblies 3 of the same shape.

The locations at which the module guide 3-3 and the guide mount portion 3-5 are formed are not limited to the above-described locations.

The first battery module assembly may include the first connector 10 exposed upwards for electrical connection to the second battery module assembly.

The second battery module assembly may include the second connector 20 exposed downwards for electrical connection to the first battery module assembly.

The first connector 10 and the second connector 20 may be electrically connected to each other.

The first connector 10 and the second connector 20 may be spaced a predetermined distance L1 apart from each other when the module guide 3-3 is pre-mounted in the guide mount portion 3-5. The predetermined distance L1 may be in a range between 4 mm and 5 mm, but is not limited thereto.

As described above, when the module guide 3-3 is pre-mounted in the guide mount portion 3-5, the first connector 10 and the second connector 20 are spaced the predetermined distance L1 apart from each other, so it may be possible to prevent damage caused by collision between the first connector 10 and the second connector 20.

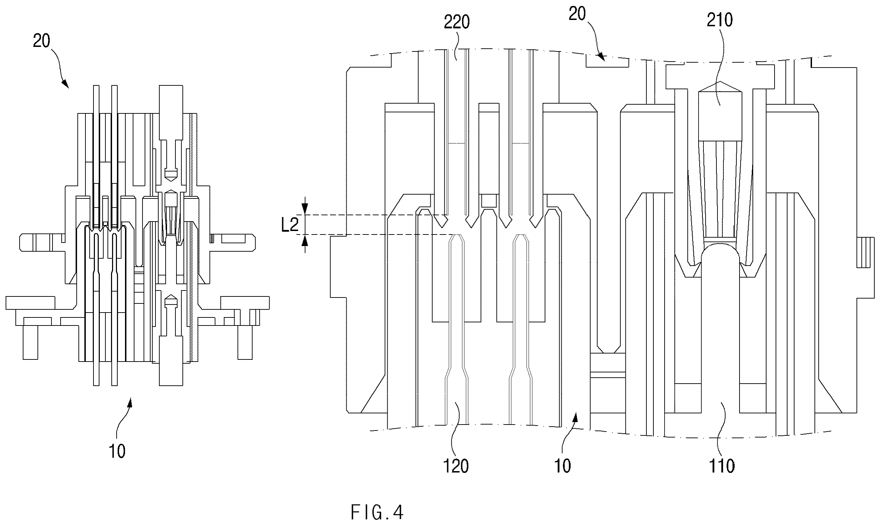

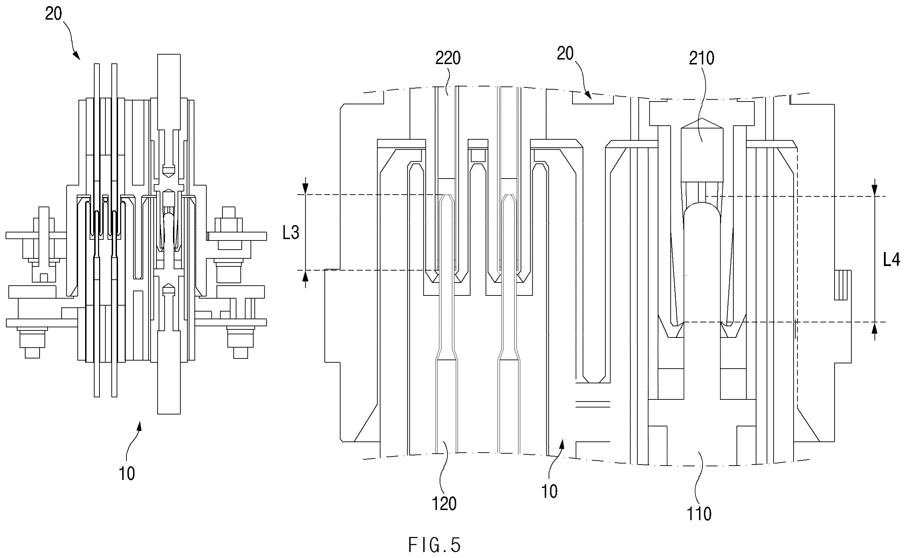

FIG. 4 is a cross-sectional view showing a certain point in time when terminals are being coupled according to an embodiment of the present disclosure, and FIG. 5 is a cross-sectional view showing the coupled terminals according to an embodiment of the present disclosure.

After the pre-mounting, the mounting of the first connector 10 and the second connector 20 may be completed by the weight of the second battery module assembly. For example, after the pre-mounting, the first connector 10 and the second connector 20 may be coupled by the load of the second battery module assembly pre-mounted on the first battery module assembly.

The first connector 10 may include a terminal for first high voltage 110 and a terminal for first low voltage 120.

The second connector 20 may include a terminal for second high voltage 210 and a terminal for a second low voltage 220.

When the terminal for first high voltage 110 and the terminal for second high voltage 210 come into contact with each other, the terminal for first low voltage 120 and the terminal for second low voltage 220 may be spaced a predetermined distance L2 apart from each other. The predetermined distance L2 at which the terminal for first low voltage 120 and the terminal for second low voltage 220 are spaced apart from each other may be in a range between 1 mm and 1.5 mm, but is not limited thereto.

The terminal for first high voltage 110 and the terminal for second high voltage 210 may have a larger radius than the terminal for first low voltage 120 and the terminal for second low voltage 220, respectively.

The terminal for first high voltage 110 and the terminal for second high voltage 210 may have higher rigidity than the terminal for first low voltage 120 and the terminal for second low voltage 220, respectively.

The terminal for first high voltage 110 may be inserted into the terminal for second high voltage 210 before the terminal for second low voltage 220 is inserted into the terminal for first low voltage 120.

As described above, because the terminal for first high voltage 110 is inserted into the terminal for second high voltage 210 before the terminal for second low voltage 220 is inserted into the terminal for first low voltage 120, the terminals for high voltage having higher rigidity and larger radius may be coupled first, then the terminals for low voltage having lower rigidity may be coupled. Accordingly, damage of the terminals may be prevented. Additionally, the terminals for high voltage may be inserted first and guide the terminals for low voltage.

When the terminal for first high voltage 110 is completely inserted into the terminal for second high voltage 210, an overlap length may be in a range between 4 mm and 5 mm. Additionally, when the terminal for first low voltage 120 is completely inserted into the terminal for second low voltage 220, an overlap length may be in a range between 3.5 mm and 4 mm. The above-described numerical range is provided by way of example, and is not limited thereto.

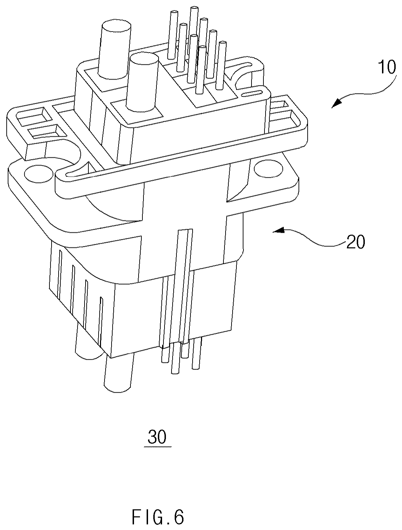

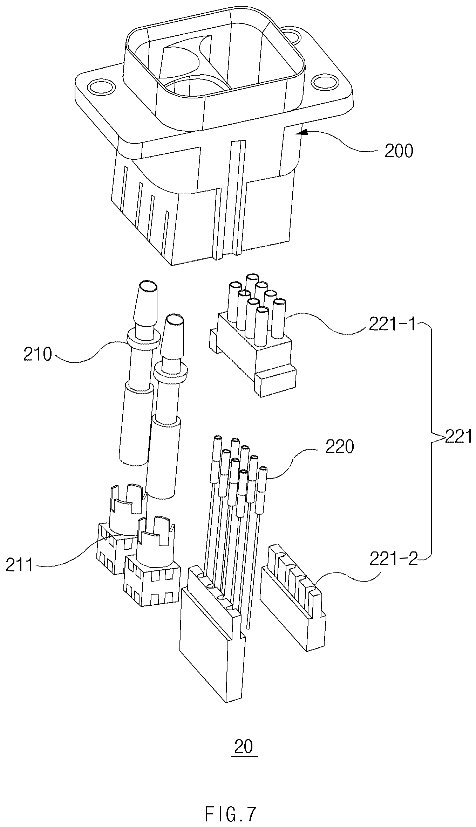

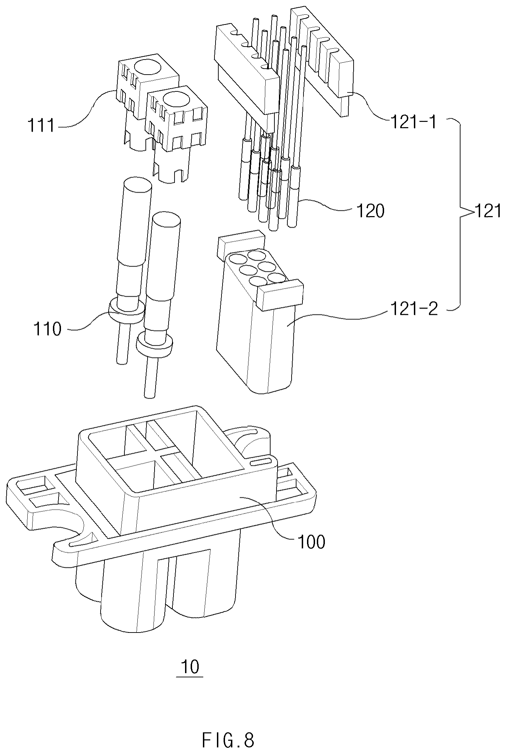

FIG. 6 is a perspective view showing a connector assembly in a coupled state according to an embodiment of the present disclosure, FIG. 7 is an exploded perspective view of the second connector according to an embodiment of the present disclosure, and FIG. 8 is an exploded perspective view of the first connector according to an embodiment of the present disclosure. The description of the above-described embodiments may be equally or similarly applied to this embodiment.

The first connector 10 and the second connector 20 may be coupled to form the connector assembly 30.

The second connector 20 may include a second connector housing 200. The second connector housing 200 may form a boundary of the second connector 20.

The second connector 20 may include the terminals 210, 220. The terminals 210, 220 may be inserted into the second connector housing 200 in a predetermined insertion direction.

The second connector 20 may include terminal blocks 211, 221.

The terminal blocks 211, 221 may be inserted into the second connector housing 200, cover the terminals 210, 220, and be configured to limit the movement of the terminals 210, 220 in a direction that is opposite to the insertion direction. The second connector housing 200 may have a protruding portion to lock the terminal blocks 211, 221.

The terminals 210, 220 may include the terminal for second high voltage 210 and the terminal for second low voltage 220.

The terminal blocks 211, 221 may include the terminal block for second high voltage 211 and the terminal block for second low voltage 221.

The terminal block for second low voltage 221 may include an upper block for second low voltage 221-1 and a lower block for second low voltage 221-2.

The first connector 10 may include a first connector housing 100. The first connector housing 100 may form a boundary of the first connector 10.

The first connector 10 may include the terminals 110, 120. The terminals 110, 120 may be inserted into the first connector housing 100 in a predetermined insertion direction.

The first connector 10 may include terminal blocks 111, 121.

The terminal blocks 111, 121 may be inserted into the first connector housing 100, cover the terminals 110, 120, and be configured to limit the movement of the terminals 110, 120 in a direction that is opposite to the insertion direction. The first connector housing 100 may have a protruding portion to lock the terminal blocks 111, 121.

The terminals 110, 120 may include the terminal for first high voltage 110 and the terminal for first low voltage 120.

The terminal blocks 111, 121 may include the terminal block for first high voltage 111 and the terminal block for first low voltage 121.

The terminal block for first low voltage 121 may include an upper block for first low voltage 121-1 and a lower block for first low voltage 121-2.

The description of the first connector 10 as described below may be equally or similarly applied to the second connector 20.

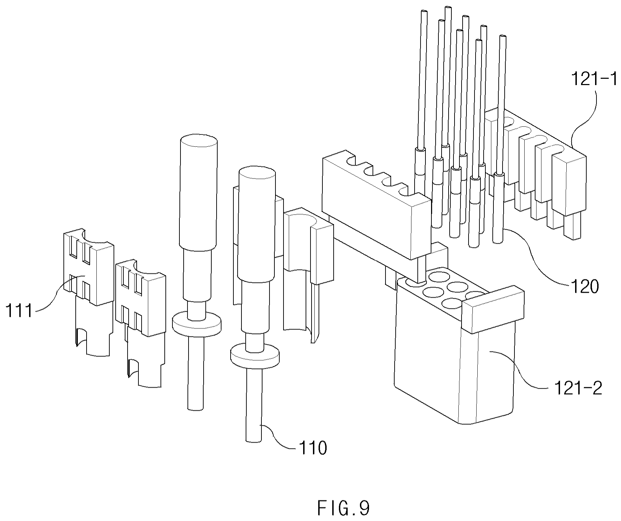

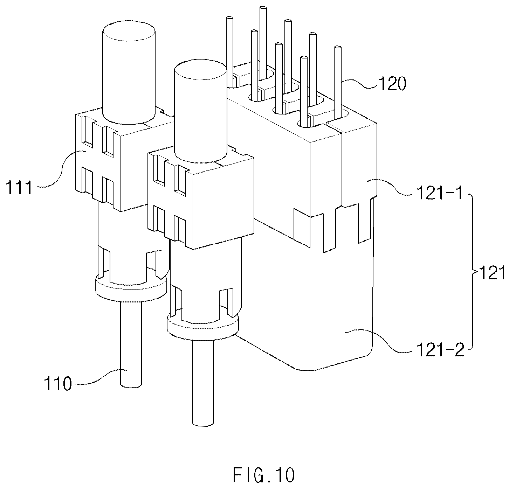

FIG. 9 is an exploded perspective view showing the terminal block of the first connector according to an embodiment of the present disclosure, and FIG. 10 is a perspective view showing the terminal block of the first connector according to an embodiment of the present disclosure. The description of the above-described embodiments may be equally or similarly applied to this embodiment.

The first connector 10 may include the terminal block for first high voltage 111 and the terminal block for first low voltage 121.

The terminal block for first high voltage 111 may be configured to cover the terminal for first high voltage 110.

The terminal block for first low voltage 121 may include the upper block for first low voltage 121-1 and the lower block for first low voltage 121-2.

The lower block for first low voltage 121-2 may be configured to cover the terminal for first low voltage 120.

The upper block for first low voltage 121-1 may be stacked on the lower block for first low voltage 121-1 and configured to support the lower block for first low voltage 121-1 on the outer side to limit the movement of the lower block for first low voltage 121-1 in the direction that is opposite to the insertion direction when the lower block for first low voltage 121-1 is inserted into the first connector housing 10.

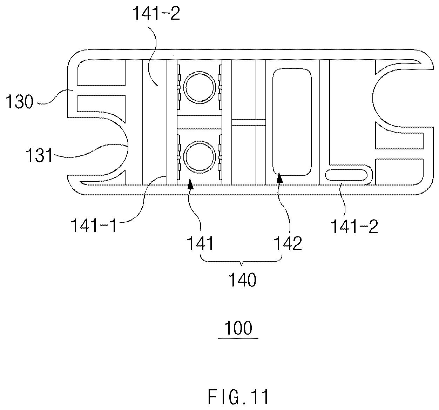

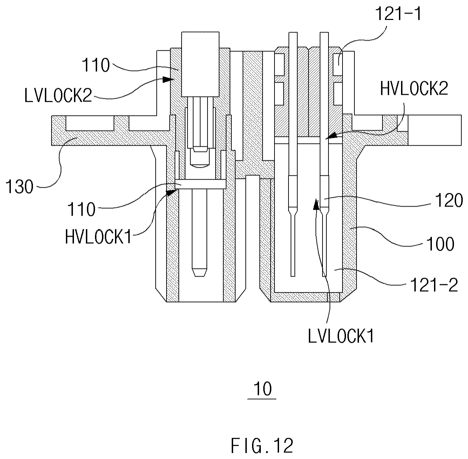

FIG. 11 is a diagram of the first connector housing according to an embodiment of the present disclosure when viewed from a direction. FIG. 12 is a cross-sectional view of the first connector according to an embodiment of the present disclosure. The description of the above-described embodiments may be equally or similarly applied to this embodiment.

The first connector housing 100 may include a terminal block mount portion 140.

The terminal block mount portion 140 may include a terminal block mount portion for first high voltage 141 and a terminal block mount portion for first low voltage 142.

The terminal block mount portion for first low voltage 142 may allow for insertion of the terminal for first low voltage 120 in a predetermined insertion direction.

The terminal block for first low voltage 121 may be inserted into the terminal block mount portion for first low voltage 142, while surrounding the terminal for first low voltage 120.

The terminal block for first low voltage 121 may include the upper block for first low voltage 121-1 and the lower block for first low voltage 121-2.

The lower block for first low voltage 121-2 may be disposed inside of the terminal block mount portion for first low voltage 142, while surrounding the terminal for first low voltage 120.

The upper block for first low voltage 121-1 may be stacked on the lower block for first low voltage 121-2 and configured to support the lower block for first low voltage 121-2 on the outer side to limit the movement of the lower block for first low voltage 121-2 in the direction that is opposite to the insertion direction when the lower block for first low voltage 121-2 is inserted into the first connector housing 100.

The first connector 10 may include the terminal block mount portion for first high voltage 141. For example, the terminal block mount portion for first high voltage 141 may be formed in the first connector housing 100.

The first connector 10 may include the terminal for first high voltage 110. The terminal for first high voltage 110 may be inserted into the terminal block mount portion for first high voltage 141 in a predetermined insertion direction.

The first connector 10 may include the terminal block for first high voltage 111. The terminal block for first high voltage 111 may be inserted into the terminal block mount portion for first high voltage 141, while surrounding the terminal for first high voltage 110.

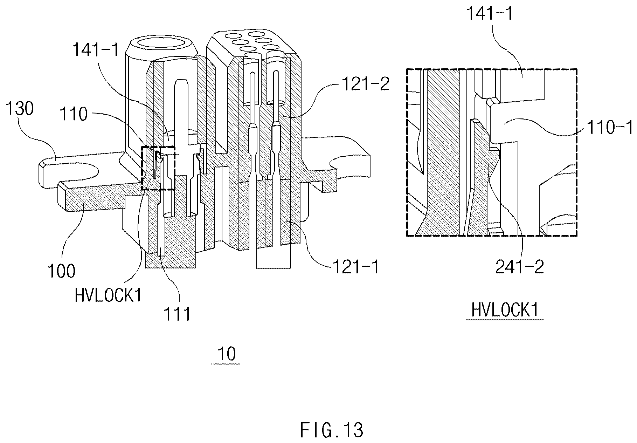

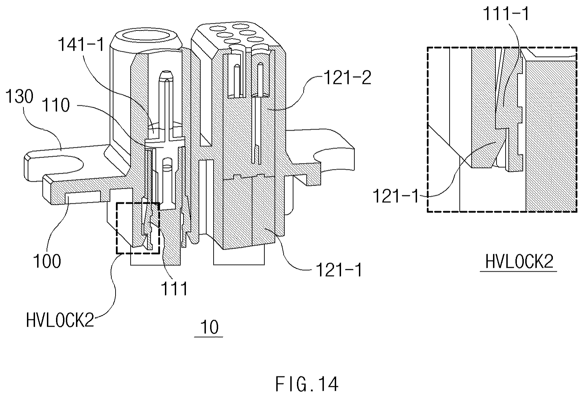

FIG. 13 is a cross-sectional view showing a first locking structure for first high voltage of the first connector according to an embodiment of the present disclosure. FIG. 14 is a cross-sectional view showing a second locking structure for first high voltage of the first connector according to an embodiment of the present disclosure. The description of the above-described embodiments may be equally or similarly applied to this embodiment.

The first connector housing 100 may include a stopper portion 141-1. The stopper portion 141-1 may support the terminal for first high voltage 110 to prevent it from entering in the insertion direction more than a predetermined extent.

The first connector housing 100 may include a first protruding portion 141-2. The first protruding portion 141-2 may protrude in the inward direction of the first connector housing 100 to limit the movement of the terminal block for first high voltage 111 in the direction that is opposite to the insertion direction.

The first connector housing 100 may include a second protruding portion 141-3. The second protruding portion 141-3 may protrude in the inward direction of the first connector housing 100 to limit the movement of the terminal for first high voltage 110 in the direction that is opposite to the insertion direction.

The terminal for first high voltage 110 may include a protruding portion 110-1. The protruding portion 110-1 may protrude in a direction perpendicular to the direction of insertion into the first connector housing 100. For example, the protruding portion 110-1 of the terminal for first high voltage 110 may protrude outwards so that it may come into contact with the second protruding portion 141-3. The second protruding portion 141-3 may protrude in the inward direction of the first connector housing 100 to lock the protruding portion 110-1. The protruding portion 110-1 may be understood as a terminal protruding portion.

The terminal block for first high voltage 111 may have a block protruding portion 111-1 that protrudes outwards. For example, the block protruding portion 111-1 may protrude outwards so that it may come into contact with the first protruding portion 141-2. Specifically, for example, the first protruding portion 141-2 may protrude in the inward direction of the first connector housing 100 so that it may come into contact with the block protruding portion 111-1 to suppress the movement of the terminal block for first high voltage 111 when a force acts in the direction that is opposite to the direction of insertion into the first connector housing 100.

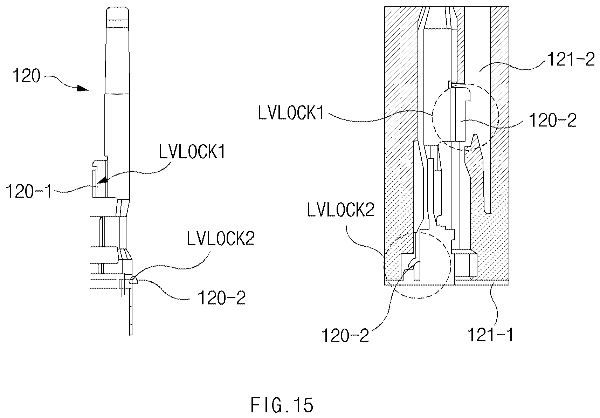

FIG. 15 is a conceptual diagram showing the first locking structure and the second locking structure for first low voltage of the first connector according to an embodiment of the present disclosure. The description of the above-described embodiments may be equally or similarly applied to this embodiment.

The terminal for first low voltage 120 may have a protruding portion 120-1 that protrudes in a direction perpendicular to the direction of insertion into the first connector housing 100. The protruding portion 120-1 may be understood as a terminal protruding portion. The protruding portion 120-1 may protrude toward the terminal block for first low voltage 121 so that it may come into contact with the terminal block for first low voltage 121. Specifically, for example, the protruding portion 120-1 may protrude in the direction perpendicular to the direction of insertion into the first connector housing 100 so that it may come into contact with the terminal lower block for first low voltage 121-2.

The terminal for first low voltage 120 may have a protruding portion 120-2 that protrudes so that it may come into contact with the terminal block for first low voltage 121. The protruding portion 120-2 may be understood as a terminal protruding portion. Specifically, for example, the protruding portion 120-2 may extend toward the terminal upper block for first low voltage 121-1 and protrude such that it is supported by the terminal upper block for first low voltage 121-1 when a force acts in the direction that is opposite to the insertion direction.

For convenience of description, the terminal lower block for first low voltage 121-2 and the terminal upper block for first low voltage 121-1 may be referred to as a first terminal block and a second terminal block.

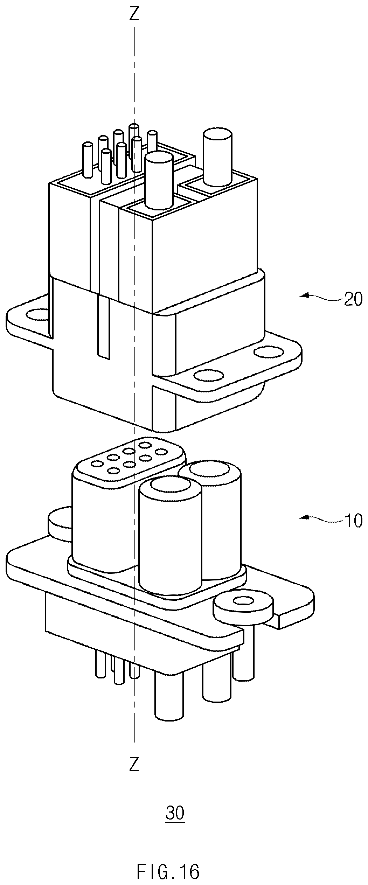

FIG. 16 is an exploded perspective view showing the connector assembly according to an embodiment of the present disclosure. The description of the above-described embodiments may be equally or similarly applied to this embodiment. FIG. 16 shows the connector assembly 30 rotated 180o around a coupling axis when compared with FIG. 6.

The first connector 10 and the second connector 20 may be coupled to form the connector assembly 30. FIG. 16 shows that the first connector 10 and the second connector 20 may form the connector assembly 30 along the coupling axis Z-Z'.

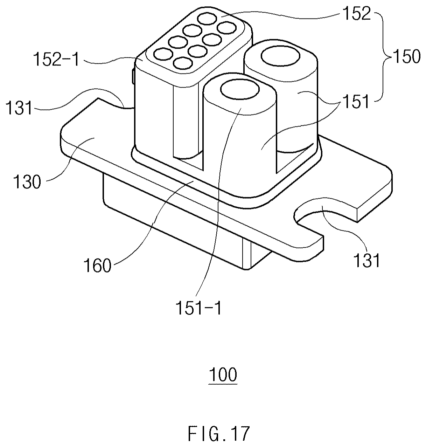

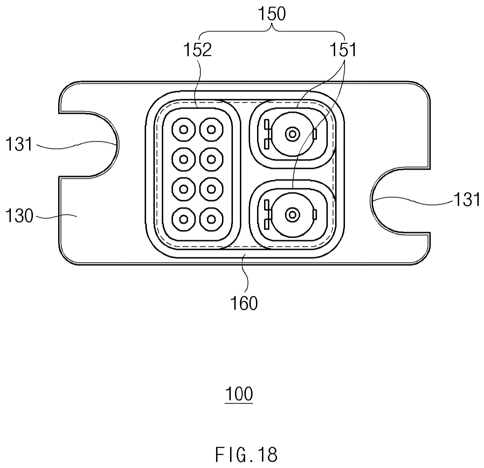

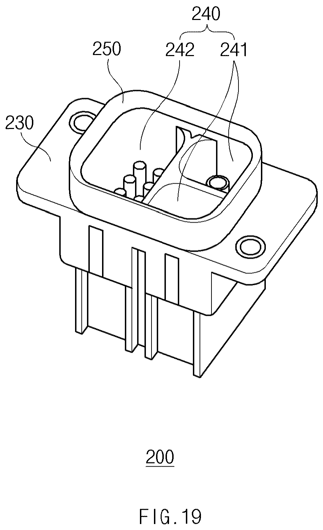

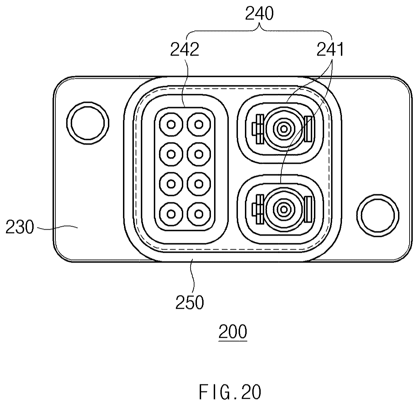

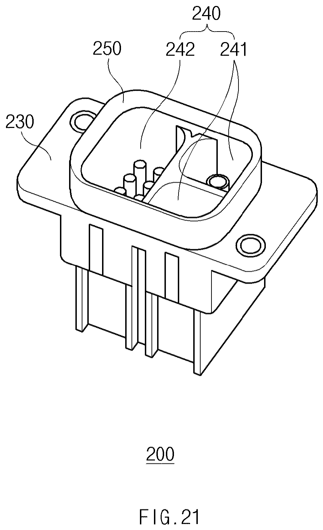

FIG. 17 is a perspective view showing the first connector housing according to an embodiment of the present disclosure, FIG. 18 is a top view showing the first connector housing according to an embodiment of the present disclosure, FIG. 19 is a perspective view showing the second connector housing according to an embodiment of the present disclosure, FIG. 20 is a top view showing the second connector housing according to an embodiment of the present disclosure, and FIG. 21 is a perspective view showing an inclined portion of the second connector housing according to an embodiment of the present disclosure. The description of the above-described embodiments may be equally or similarly applied to this embodiment.

The first connector 10 may include the first connector housing 100.

The first connector housing 100 may include a first body portion 130.

The first connector housing 100 may include a holding member mount portion 231. The holding member mount portion 231 may be formed in the shape of a through-hole at the edge of the first body portion 130.

The first connector housing 100 may include a first connection portion 150. For example, the first connection portion 150 may protrude toward a direction from the first body portion 130. The direction may be an upward direction along the coupling axis Z-Z'.

The first connection portion 150 may include a first high voltage connection portion 151. For example, the first high voltage connection portion 151 may form a boundary that surrounds the terminal for first high voltage 110.

The first connection portion 150 may include a first low voltage connection portion 152. For example, the first low voltage connection portion 152 may form a boundary that surrounds the terminal for first low voltage 120.

The first high voltage connection portion 151 and the first low voltage connection portion 152 may extend in a direction, spaced apart from the body portion 130.

The first connection portion 150 may have round portions 151-1, 152-1. For example, the first high voltage connection portion 151 and the first low voltage connection portion 152 may have the round portion 151-1 and the round portion 152-1 at the end, respectively, to allow for sliding.

The first high voltage connection portion 151 and the first low voltage connection portion 152 may have the round portion 151-1 and the round portion 152-1 to slide on the inclined portion 250 as described below.

The first connector housing 100 may include a corresponding inclined portion 160. The corresponding inclined portion 160 may have a corresponding shape to the inclined portion 250 as described below.

The corresponding inclined portion 160 may be formed at the edge of the first connection portion 150, and have a corresponding inclination to the inclined portion 250 so that the inclined portion 250 as described below may be seated.

The corresponding inclined portion 160 may have a perimeter that surrounds the first high voltage connection portion 151 and the first low voltage connection portion 152 when viewed from top. To put it another way, when viewed along the insertion direction (or the coupling axis Z-Z'), the first high voltage connection portion 151 and the first low voltage connection portion 152 may be disposed on the inner side of the corresponding inclined portion 160.

The second connector housing 200 may include a second body portion 230.

The second connector housing 200 may include a second connection portion 240. The second connection portion 240 may be recessed in the insertion direction of the first connection portion 150 from the second body portion 230 to accommodate the first connection portion 150.

The second connection portion 150 may include a second high voltage connection portion 241 and a second low voltage connection portion 242. The second high voltage connection portion 241 and the second low voltage connection portion 242 may have a recessed shape in the second body portion 230, corresponding to the first high voltage connection portion 151 and the first low voltage connection portion 152, respectively.

The inclined portion 250 may be formed at the edge of the second connection portion 240 and inclined to allow the first connection portion 150 to slide.

The inclined portion 250 may extend from the edge of the second connection portion 150 at an angle to the insertion direction (or the coupling axis Z-Z') in a direction facing away from the coupling axis Z-Z' of the insertion direction.

The second high voltage connection portion 241 and the second low voltage connection portion 242 may be disposed on the inner side of the inclined portion 250 when viewed along the insertion direction (or the coupling axis Z-Z').

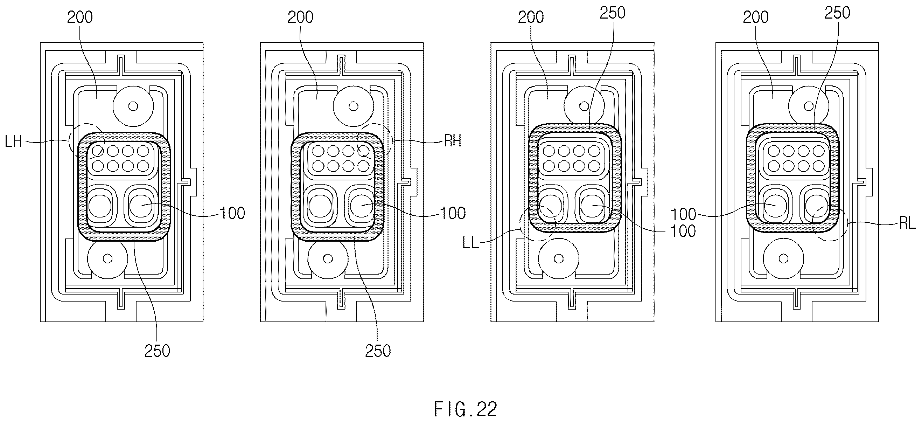

FIG. 22 is a conceptual diagram showing the sliding of the first connector and the second connector according to an embodiment of the present disclosure. The description of the above-described embodiments may be equally or similarly applied to this embodiment.

When the second connector 20 is mounted on the first connector 10, the mounting may be completed by the weight of the battery module assembly 3.

In the pre-mounted state, when the second connector 20 is mounted on the first connector 10 by the weight of the battery module assembly 3, the first connection portion 150 of the first connector 10 may be accurately inserted into the second connection portion 240 of the second connector 20 without collision or contact.

In the pre-mounted state, when the second connector 20 is mounted on the first connector 10 by the weight of the battery module assembly 3, collision or contact may occur between the first connection portion 150 of the first connector 10 and the second connection portion 240 of the second connector 20. In this case, the first connection portion 150 may collide or contact with the inclined portion 250.

The insertion of the first connection portion 150 into the second connector 20 may be guided by the inclination of the inclined portion 250. For example, when viewed from top along the coupling axis Z-Z', the first connection portion 150 may contact the left top LH, the right top RH, the left bottom LL and the right bottom RL. An inclined surface is formed at the left top LH, the right top RH, the left bottom LL and the right bottom RL to guide the first connection portion 150 into the second connector 20.

Although the foregoing description takes the left top LH, the right top RH, the left bottom LL and the right bottom RL as an example, the same is the case with any location of the inclined portion 250.

As the first connection portion 150 has the round portions 151-1, 152-1, it may be possible to guide the insertion more effectively with minimum damage or abrasion of the inclined portion 250.

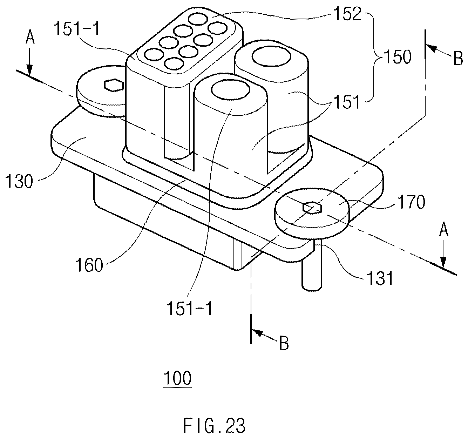

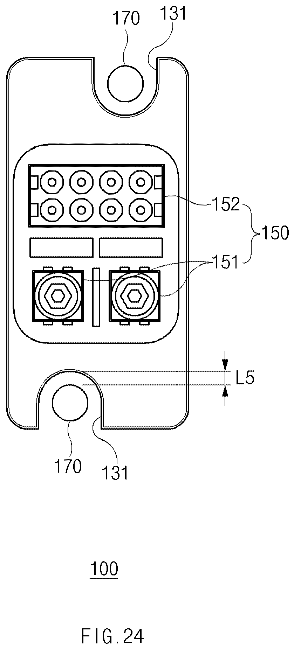

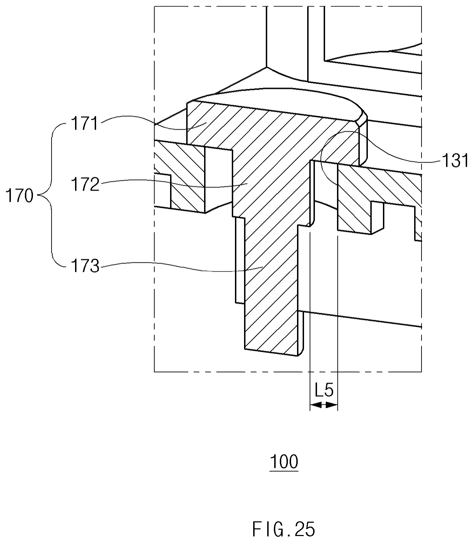

FIG. 23 is a perspective view showing a holding member mounted in the first connector housing according to an embodiment of the present disclosure, FIG. 24 is a conceptual diagram showing the holding member mounted in the first connector housing according to an embodiment of the present disclosure, and FIG. 25 is a partial enlarged view showing the holding member mounted in the first connector housing according to an embodiment of the present disclosure. The description of the above-described embodiments may be equally or similarly applied to this embodiment.

The first connector 10 may include the holding member 170.

The holding member 170 may be mounted in the first body portion 130 such that the first connector 10 can move within a predetermined range. For example, when the second connector 20 is mounted on the first connector 10, the holding member 170 may be mounted in the first body portion 130 such that the first connector 10 can move within the predetermined range. Specifically, the holding member 170 may be mounted in a holding member mount portion 231 of the first body portion 130.

The holding member 170 may moveably couple the first body portion 130 to the battery module assembly 3 (or the first connector mount portion 3-1) in which the first body portion 130 is mounted.

The first body portion 130 may include the holding member mount portion 131 having a through-hole in which the holding member 170 is mounted. The through-hole of the holding member mount portion 131 may have a shape including a semispherical shape. The semispherical shape may make a first part 172 of the holding member 170 and the holding member mount portion 131 spaced a predetermined distance apart from each other.

The holding member 170 may have a portion that contacts the holding member mount portion 131 and other portion that is spaced apart from the holding member mount portion 131.

The holding member 170 may include a head portion 171. For example, the head portion 171 may have a larger diameter than the through-hole and be seated on the holding member mount portion 131.

The holding member 170 may include the first part 172. For example, the first part 172 may be connected to the head portion 171 and spaced a predetermined distance L5 apart from the holding member mount portion 131. Additionally, the first part 172 may have a length corresponding to a thickness of the first body portion 130.

The holding member 170 may include a second part 173. For example, the second part 173 may be connected to the first part 172, and have a smaller outer diameter than the first part 172. However, the second part 173 may not have a smaller outer diameter than the first part 172, and there may be no particular limitation. The second part 173 may be coupled to the battery module assembly 3 (or the first connector mount portion 3-1).

When the second connector 20 is mounted on the first connector 10, and the first connector 10 can move within the predetermined range, it may be possible to guide the mounting of the second connector 20 on the first connector 10 with minimum damage or abrasion. To put it another way, as the first connector 10 can freely move as much as the predetermined distance L5, it may be possible to effectively guide the first connection portion 150 into the second connector 20.

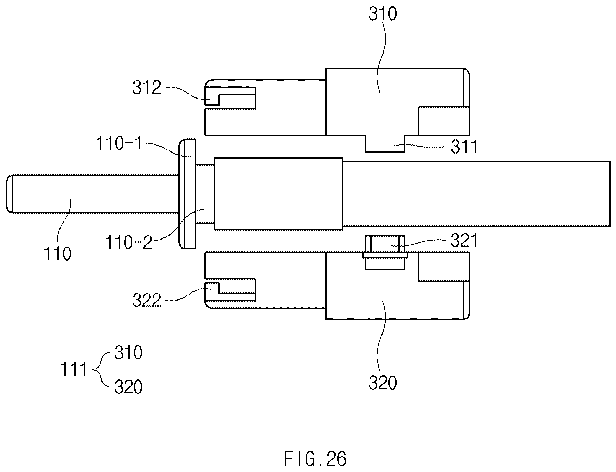

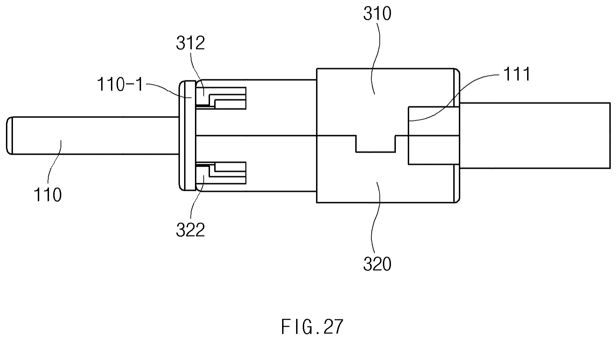

FIG. 26 is an exploded perspective view showing the terminal block for first high voltage and the terminal for first high voltage according to an embodiment of the present disclosure. FIG. 27 is a perspective view showing the terminal block for first high voltage and the terminal for first high voltage in a coupled state according to an embodiment of the present disclosure. The description of the above-described embodiments may be equally or similarly applied to this embodiment.

The terminal block for first high voltage 111 may include a first block 310. For example, the first block 310 may cover one surface of the terminal for first high voltage 110.

The terminal block for first high voltage 111 may include a second block 320. For example, the second block 320 may be coupled with the first block 310 and cover the other surface of the terminal for first high voltage 110.

The terminal block for first high voltage 111 may also cover a portion of an electrical line connected to the terminal for first high voltage 110.

The terminal for first high voltage 110 may include a groove portion 110-2. For example, the groove portion 110-2 may be a recessed portion of the terminal for first high voltage 110.

The terminal block for first high voltage 111 may include an interlock portion 312. The interlock portion 312 may be configured to fit the terminal for first high voltage 110 side end of the terminal block for first high voltage 111 into the groove portion 110-2.

The first block 310 may include a first coupling portion 311 for interference fit coupling.

The second block 320 may include a second coupling portion 321 for interference fit coupling.

The terminal block for first high voltage 111 may be mounted in the terminal for first high voltage 110 by the interference fit coupling of the first coupling portion 311 and the second coupling portion 321.

The terminal for first high voltage 110 may include the protruding portion 110-1. The protruding portion 110-1 may protrude to limit the movement of the terminal block for first high voltage 111 in the length direction of the terminal for first high voltage 110.

As the terminal block for first high voltage 111 includes the protruding portion 111-1 protruding toward the first connector housing 100, the movement relative to the first connector housing 100 may be limited.

The first connector housing 100 may support the protruding portion 111-1 to limit the movement of the terminal block for first high voltage 111 when a force acts on the terminal block for first high voltage 111 in the direction that is opposite to the insertion direction.

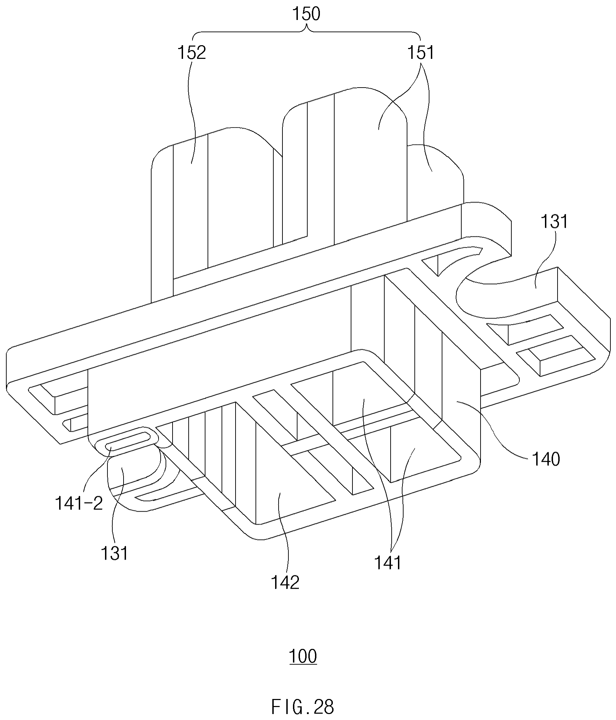

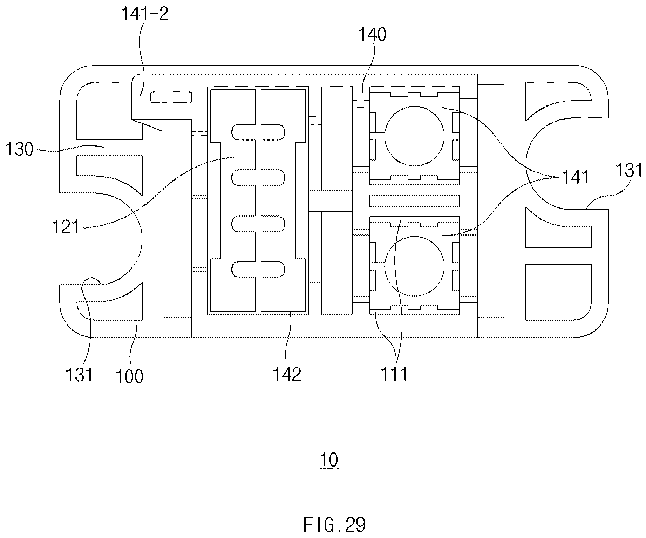

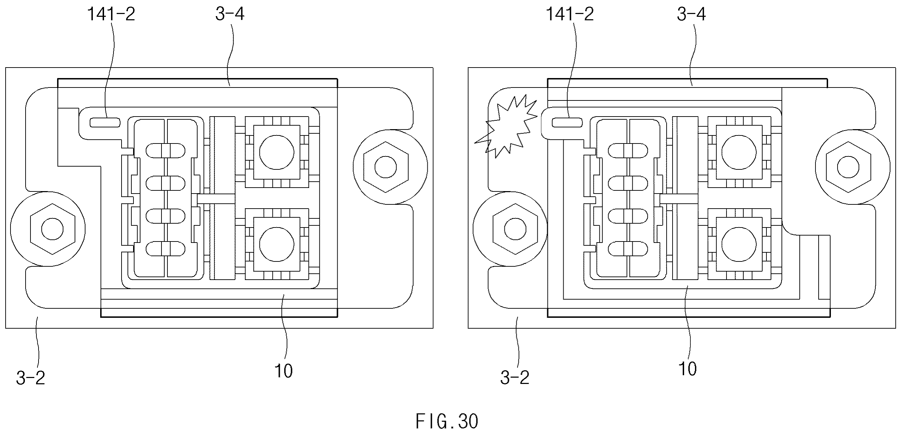

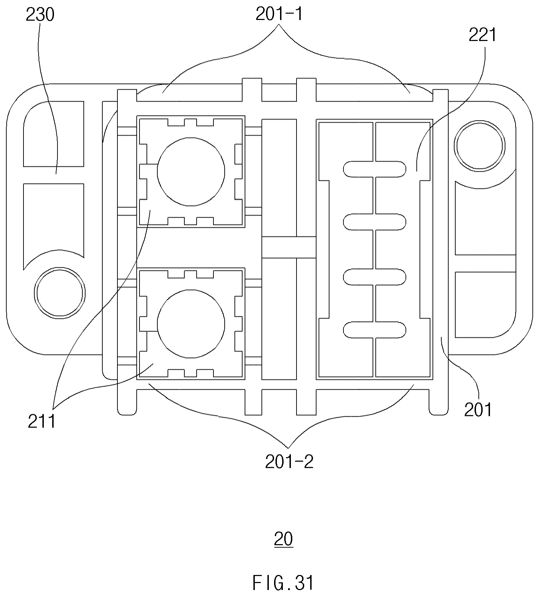

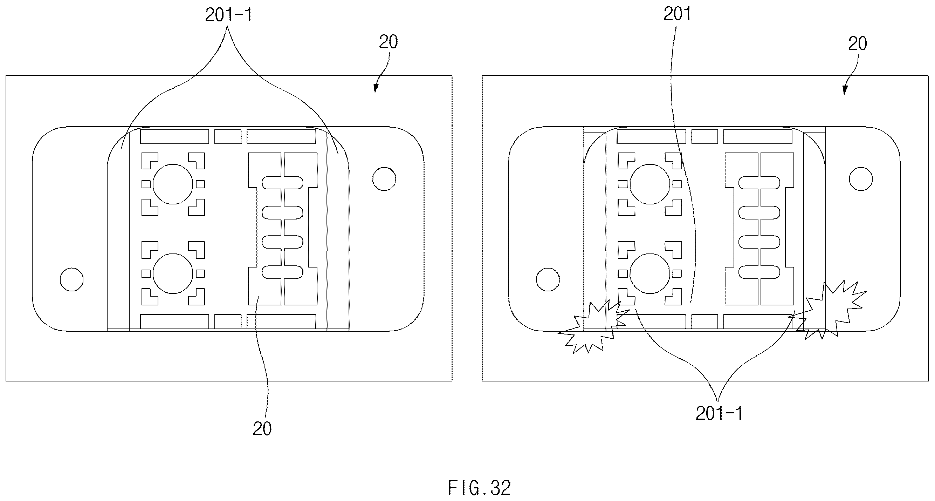

FIG. 28 is a perspective view showing the terminal block mount portion of the first connector housing according to an embodiment of the present disclosure, FIG. 29 is a bottom view showing the terminal block mount portion of the first connector according to an embodiment of the present disclosure, FIG. 30 is a conceptual diagram showing the first connector mounted in the first connector mount portion according to an embodiment of the present disclosure, FIG. 31 is a bottom view showing the terminal block mount portion of the second connector according to an embodiment of the present disclosure, and FIG. 32 is a conceptual diagram showing the second connector mounted in the second connector mount portion according to an embodiment of the present disclosure. The description of the above-described embodiments may be equally or similarly applied to this embodiment.

The description of the above-described embodiments may be equally or similarly applied to this embodiment.

As described above, the connectors 10, 20 may include the body portions 130, 230, the connection portions 150, 240 disposed on one side of the body portions 130, 230 to make an electrical connection to an external device, and the mount portions 140, 201 that are disposed on the other side of the body portions 130, 230, open to allow for insertion of the terminals 110, 120, 210, 220 and mounted in the battery module assembly 3.

The mount portions 140, 201 may be a mount portion as a terminal block mount portion, and may be also a mount portion that is mounted in the battery module assembly 3 (or the connector mount portions 3-1, 3-2).

The mount portions 140, 201 may be asymmetrically formed.

For example, the mount portion 140 may include a protruding portion 241-2 at an edge, and the protruding portion 241-2 may protrude in a direction across the edge. Specifically, the protruding portion 241-2 may extend perpendicularly to the edge, but is not limited thereto.

As another example, the mount portion 201 may have a round portion. Specifically, the mount portion 201 may have the round-shaped round portion at only one edge.

As the mount portions 140, 201 are asymmetrically formed, it may be possible to prevent mis-assembly, i.e., being mounted in the mounting hole 3-4 in a different direction from a direction designated to the connector mount portions 3-1, 3-2.

The shape of the mount portions 140, 201 is provided by way of illustration, and the mounts 140, 201 may be designed in a variety of asymmetrical shapes to prevent mis-assembly.

While the present disclosure has been hereinabove described with regard to a limited number of embodiments and drawings, the present disclosure is not limited thereto and may be embodied in different forms by persons having ordinary skill in the technical field pertaining to the present disclosure within the technical aspect of the present disclosure and the scope of the appended claims and their equivalents.

### [List of Reference Numerals]

1: Energy storage system
2: Battery control unit
3: Battery module assembly
3-1: First connector mount portion
3-2: Second connector mount portion
3-3: Module guide
3-4: Mounting hole
3-5: Guide mount portion
4: Bottom plate assembly
10: First connector
20: Second connector
30: Connector assembly
100: First connector housing
110: Terminal for first high voltage
110-1: Protruding portion
110-2: Groove portion
111: Terminal block for first high voltage
111-1: Protruding portion of terminal block for first high voltage
120: Terminal for first low voltage
120-1: First protruding portion
120-2: Second protruding portion
121: Terminal block for first low voltage
121-1: Upper block for first low voltage
121-2: Lower block for first low voltage
130: Body portion
131: Holding member mount portion
140: Terminal block mount portion
141: Terminal block mount portion for first high voltage
141-1: Stopper portion
141-2: First protruding portion
141-3: Second protruding portion
142: Terminal block mount portion for first low voltage
150: Connection portion
151: High voltage connection portion
151-1: Round portion
152: Low voltage connection portion
152-1: Round portion
160: Inclined portion
170: Holding member
171: Head portion
172: First part
173: Second part
200: Second connector housing
201: Terminal block mount portion
201-1: One edge
201-2: Other edge
210: Terminal for second high voltage
211: Terminal block for second high voltage
220: Terminal for second low voltage
221: Terminal block for second low voltage
221-1: Upper block for second low voltage
221-2: Lower block for second low voltage
230: Body portion
240: Connection portion
241: High voltage connection portion
242: Low voltage connection portion
250: Inclined portion
310: First block
311: First coupling portion
312: Interlock portion
320: Second block
321: Second coupling portion
322: Interlock portion
HVLOCK1: First locking structure for second high voltage
HVLOCK2: Second locking structure for second high voltage
LVLOCK1: First locking structure for second low voltage
LVLOCK2: Second locking structure for second low voltage

## Claims

1. A connector assembly comprising:
a first connector including a first body portion, and a first connection portion that protrudes toward a direction from the first body portion; and
a second connector including a second body portion, and a second connection portion recessed in the insertion direction of the first connection portion from the second body portion to accommodate the first connection portion,
wherein an inclined portion is formed at an edge of the second connection portion and inclined to allow the first connection portion to slide.

2. The connector assembly according to claim 1, wherein the inclined portion extends from the edge of the second connection portion at an angle to the insertion direction in a direction facing away from an insertion axis of the insertion direction.

3. The connector assembly according to claim 1, wherein the second connection portion includes a second high voltage connection portion and a second low voltage connection portion at an inner side of the inclined portion when viewed along the insertion direction.

4. The connector assembly according to claim 1, wherein the first connector has a corresponding inclined portion at an edge of the first connection portion and the corresponding inclined portion has a corresponding inclination so that the inclined portion is seated.

5. The connector assembly according to claim 4, wherein the first connection portion includes a first high voltage connection portion and a first low voltage connection portion at an inner side of the corresponding inclined portion when viewed along the insertion direction.

6. The connector assembly according to claim 1, wherein an end of the first connection portion has a round portion to allow for sliding on the inclined portion.

7. The connector assembly according to claim 1, further comprising:
a holding member mounted in the first body such that the first connector can move within a predetermined range when the second connector is mounted on the first connector.

8. The connector assembly according to claim 7, wherein the holding member moveably couples the first body portion to a battery module assembly in which the first body portion is mounted.

9. The connector assembly according to claim 7, wherein the first body portion includes a holding member mount portion having a through-hole through which the holding member is mounted.

10. The connector assembly according to claim 9, wherein the through-hole of the holding member mount portion has a shape including a semispherical shape.

11. The connector assembly according to claim 9, wherein the holding member has a portion that contacts the holding member mount portion and other portion that is spaced apart from the holding member mount portion.

12. The connector assembly according to claim 11, wherein the holding member includes:
a head portion having a larger diameter than the through-hole and seated on the holding member mount portion; and
a first part connected to the head portion and spaced a predetermined distance apart from the holding member mount portion.

13. The connector assembly according to claim 12, wherein the holding member includes a second part connected to the first part and having a smaller outer diameter than the first part.

14. The connector assembly according to claim 12, wherein the first part has a length corresponding to a thickness of the first body portion.
